# EUROPEAN PATENT APPLICATION

(11) **EP 3 586 985 A1**
(43) Date of publication of application: **01.01.2020**
(21) Application number: 18203663.2
(22) Date of filing: 31.10.2018
(51) Int. Cl.: B08B 3/02, B05B 9/08, B05B 12/08

(54) **VARIABLE PRESSURE SPRAYER**

(30) Priority: 25.06.2018 US 201862689447 P; 27.09.2018 US 201816143721
(71) Applicant: Wessol, LLC, Fort Mill, SC 29708-8009 (US)
(72) Inventor: GUSTAFSON, Joseph J., CHARLOTTE, NC North Carolina 28277 (US); NORRIS, Steve, MAINVILLE, OH Ohio 45039 (US)
(74) Representative: Algemeen Octrooi- en Merkenbureau B.V.

(57) **Abstract**

A variable pressure sprayer is provided having a housing on which is mounted a battery, a battery-operated motor, and a motor-operated liquid pump, a tank communicating with the pump for holding a supply of liquid, a liquid outlet from the pump to a connector adapted to receive a hose, and an applicator wand adapted for connection to the hose for directing fluid under pressure to a desired target. A trigger is positioned on the applicator wand adapted to switch between a closed flow position and an open flow position. A variable pressure controller is positioned on the housing and connected to the motor for varying output pressure percentage of the pump.

## Description

This invention relates to a variable pressure sprayer that uses a speed controller to vary the pressure with which a liquid is dispensed from the sprayer.

Prior art sprayers work on the principle that when the user opens the sprayer nozzle through the trigger mechanism, the pressure drops and a pressure switch built into the pump senses the pressure drop and closes a switch to tell the pump motor to turn on and thus the sprayer to start spraying. When the user closes the spray nozzle the pressure switch senses the pressure increase and opens a set of contacts causing the pump motor to turn off.

One prior art sprayer has a rocker switch on the side that can change output pressure between two pre-set points so that the user can either produce maximum spray pressure or a percentage of the maximum pressure simply by changing the supply voltage to the DC pump motor and thereby altering its speed. This limits the user to only two different set points. This is disadvantageous, particularly when even the lowest pressure setting is too high for the user's application.

It is also known in the prior art to continually vary the voltage to the DC pump motor of the sprayer in order to run the pump from, for example, 10% of full pressure to 100% pressure. This can be accomplished through a varistor or similar methodology for changing voltage to the DC pump. The problem with this method, however, relates to the pressure switch. Once the motor supply voltage is dropped below a value that sets the speed at approximately 35% of full value there is no longer enough pressure for the pressure switch to turn off when the user stops spraying. This causes voltage to continue to be supplied to the pump without any liquid flow, resulting in an overload condition and possible damage to the motor and related circuitry.

A Swiss Company, Birchmeier, also has a variable pressure unit: https://www.birchmeier.us/en/content/products/rec-15-abz/index.php, but this is believed to use a more expensive speed control technology substantially different from that disclosed in this application, thus providing the disclosed sprayer of this application a very large cost advantage.

According to one aspect of the invention it is an object to provide a power sprayer that is capable of dispensing a liquid from the supply tank at a range of pressures.

According to another aspect of the invention it is an object to provide a power sprayer that uses a speed control to vary the pressure with which a liquid is dispensed from the sprayer.

According to another aspect of the invention it is an object to provide a power sprayer that uses a simple and inexpensive system for controlling the pressure at which the liquid is dispensed from the sprayer.

These and other objects and advantages of the present invention are achieved in the preferred embodiments set forth below by providing a variable pressure sprayer having a housing and a battery, a battery-operated motor, and a motor-operated liquid pump mounted on the housing, a tank communicating with the pump for holding a supply of liquid, a liquid outlet, a connector and a hose, the liquid outlet extending from the pump to the connector adapted to receive the hose, and an applicator wand adapted for connection to the hose for directing fluid under pressure to a desired target. A trigger is positioned on the applicator wand adapted to switch between a closed flow position and an open flow position. A variable pressure controller is positioned on the housing and connected to the motor for varying output pressure percentage of the pump.

According to another embodiment, the variable pressure sprayer has a pressure switch that is connected to the motor, pump, and battery and is adapted for turning on the motor when a drop in pressure is detected due to the trigger being in the open flow position, and turning off the motor when an increase in pressure is detected due to the trigger being in the closed flow position.

According to another embodiment, the variable pressure sprayer has an applicator wand that includes a valve adapted to open when the trigger is in the open flow position and a nozzle connected to the valve to spray the liquid out of the applicator wand onto the desired target.

According to another embodiment, the variable pressure sprayer the variable pressure controller is adapted to vary between 6.5% and 100% of output pressure.

According to another embodiment, the variable pressure sprayer has a controller with a sensor connected to the motor for detecting a real-time voltage across the motor and a speed control switch connected to the motor for adjusting a duty cycle of the motor based on the real-time voltage across the motor to achieve a predetermined constant pressure output defined by the variable pressure controller.

According to another embodiment, the variable pressure sprayer has a speed control switch with a stepless resistance of 40k-90k corresponding to a constant pressure of 6.5V.

According to another embodiment, the variable pressure sprayer has a controller that includes a stall protection circuit for determining if the motor is stalling and shutting down the based on a comparison of a predetermined stall threshold amp value to a real-time motor amp value.

According to another embodiment, the variable pressure sprayer has a stall protection circuit with a stored reference lookup table of stall threshold amp values based on motor voltage vs. battery voltage, and a processor adapted to receive real-time input for battery voltage, motor voltage, and motor amps, access the lookup table and determine the corresponding stall threshold amp value and determine if the motor should be shut down.

According to another embodiment, the variable pressure sprayer has a stall protection circuit that is connected to an electronic switch adapted to turn off the motor when the processor has determined that the motor amp value has exceeded the stall threshold amp value from the lookup table.

The present invention is best understood when the following detailed description of the invention is read with reference to the accompanying drawings, in which:
Figure 1 is an exploded perspective view of a sprayer according to an embodiment of the invention;
Figure 2 is a right side cross-sectional elevation of the sprayer of Figure 1;
Figure 3 is a front elevation of the sprayer of Figure 1;
Figure 4 is a front elevation of the sprayer of Figure 1 with the cover removed;
Figure 5 is a front elevation of the sprayer of Figure 1 showing the spray wand attached to the outlet hose;
Figure 6 is a electrical schematic of the motor stall protection circuit of the sprayer; and
Figure 7 is a stall current threshold lookup table for interrupting the pressure switch of the sprayer.

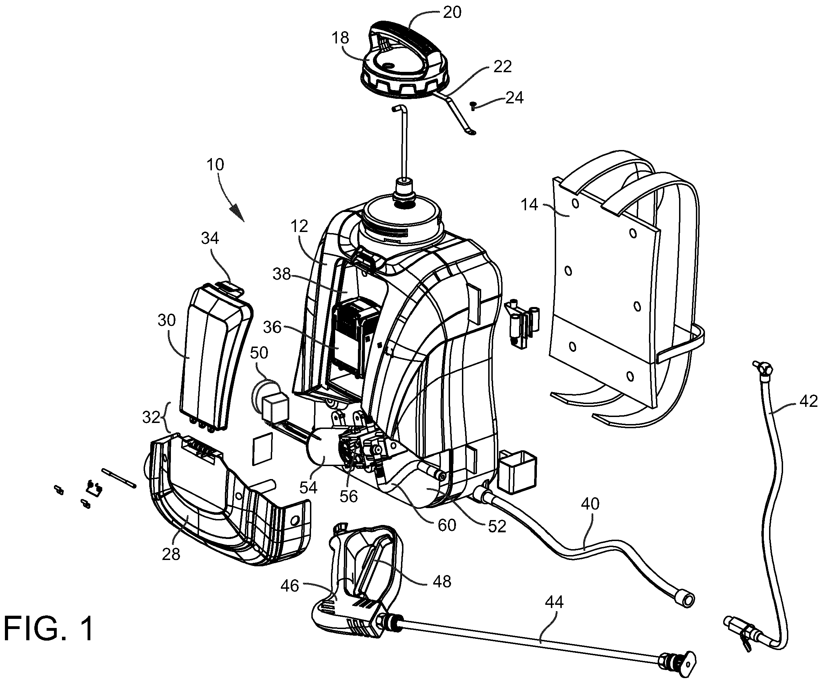

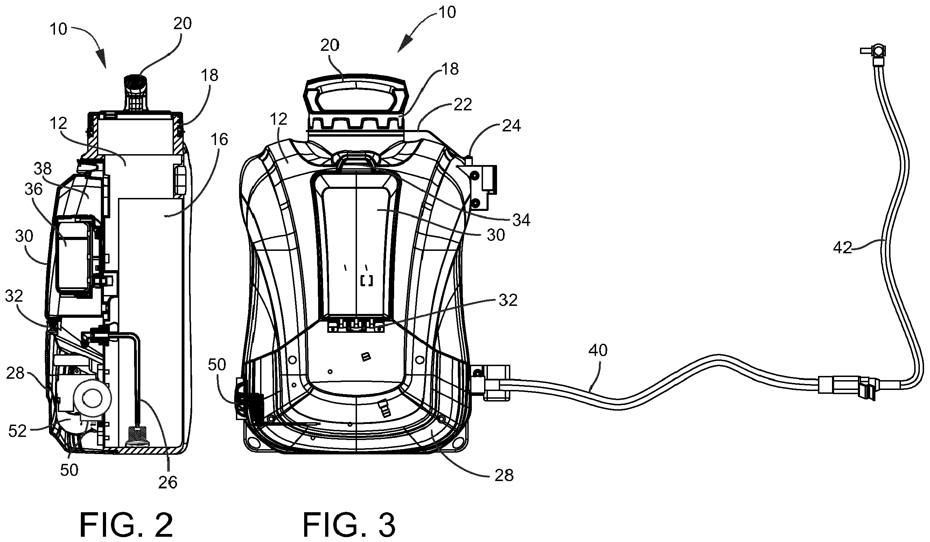

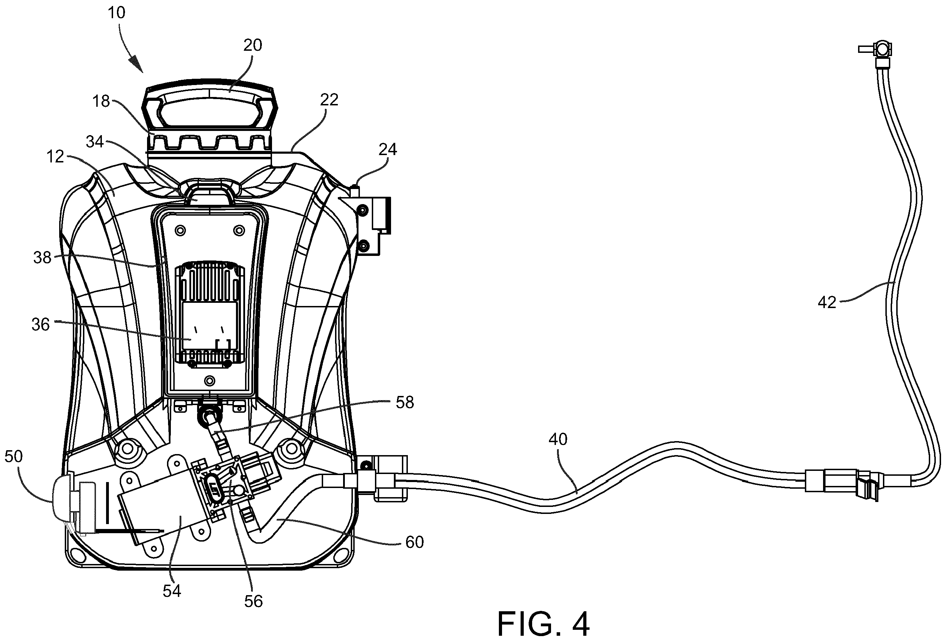

Referring now to Figures 1, 2 and 4, variable pressure sprayer 10 includes a housing 12 that encloses the operating elements of the sprayer 10. The sprayer 10 may be carried on the back of the user by a shoulder strap assembly 14 that is mounted to the back of the housing 12 by screws, not shown. The housing 12 encloses a tank 16, best shown in Figure 2, which will typical hold approximately 15 liters of liquid. The tank is accessed through a threaded cap 18 that incorporates a carry handle 20. The cap 18 is maintained in proximity to the housing 12 by a short strap 22 attached to the housing 12 by a screw or rivet 24. The interior of the tank 16 includes a siphon 26 that transfers liquid to the operating elements of the sprayer 10, described below.

The housing 12 includes a lower base cover 28 to which is mounted a battery access door 30 mounted for pivoting movement by a hinge assembly 32, and which releasably latches to the housing 12 by a latch release 34. A battery 36, such as a lithium ion battery, is mounted in a battery housing 38 of the housing 12. Liquid under pressure is dispensed from the sprayer 10 through a hose, embodied as a discharge hose section 40 that connects at one end to a connector at the downstream end of an output conduit and at the opposite end to an optional discharge hose section 42, to which an applicator wand embodied as a spray wand 44 is releasably attached. The spray wand 44 includes a pistol grip-type handle 46 with a with a trigger 48 that is manually grasped by the user, and which operates a valve, not shown, and a nozzle, not shown, connected to the valve in the handle 46 and permits the pressure of the liquid to be controlled.

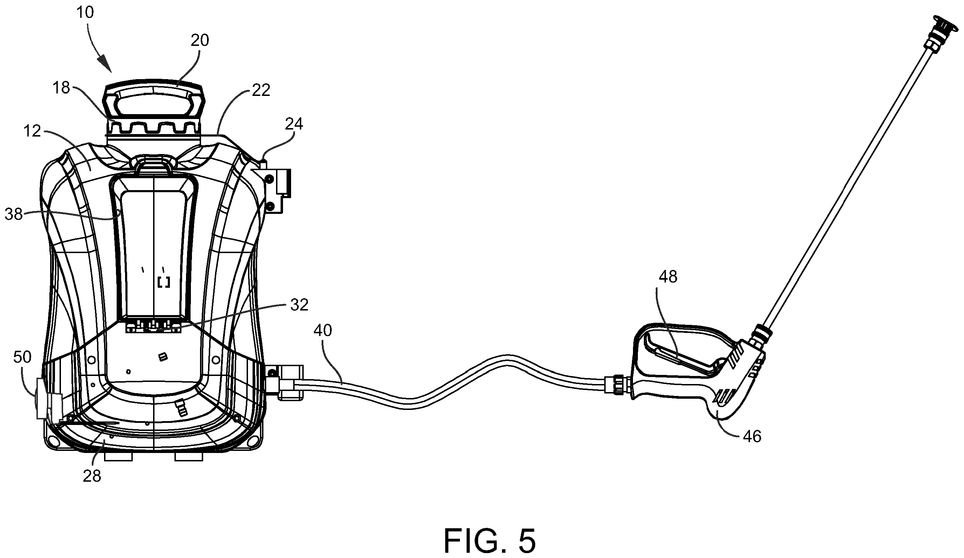

A variable pressure controller 50 is mounted externally to the side of the housing 12 and communicates with a controller housing 52 in the lower part of the housing 12. The battery 36 supplies nominal 12 V current to a motor 54 that drives a motor operated pump 56. The pump 56 draws liquid from the tank 16 through a pump input conduit 58, pressurizes the liquid and discharges it into liquid outlet embodied as the output conduit 60 that is connected through the sidewall of the housing 12 to the discharge hose section 40. Figures 3 and 5 show other views of the sprayer 10.

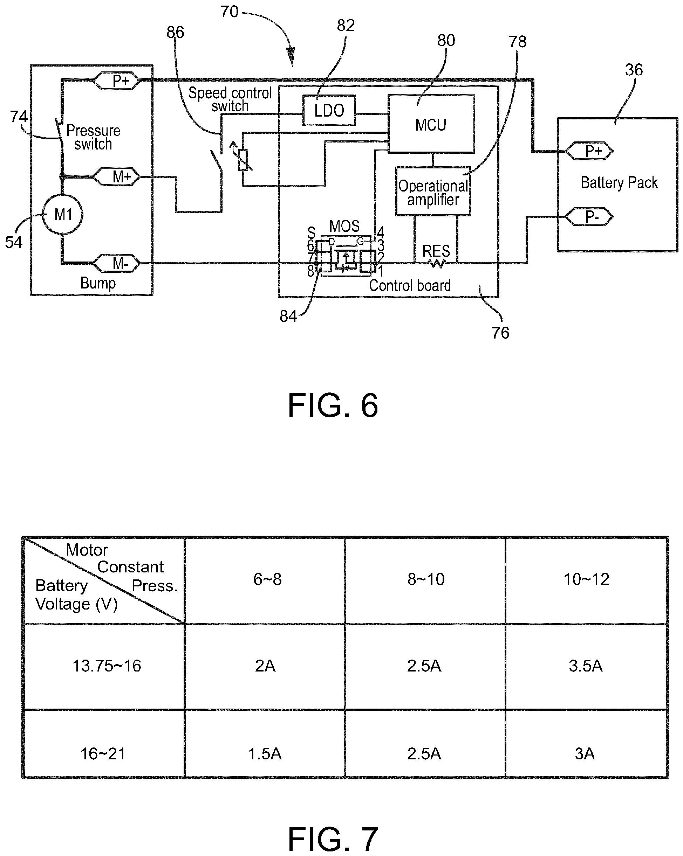

Referring to Figure 6, a motor stall protection circuit 70 is powered by the 12 V DC battery 36. The circuit 70 is connected to the motor 54 and controlled by a pressure switch 74. Current is supplied to a controller 76 that includes a sensor, not shown, an operational amplifier 78, microcontroller unit (MCU) 80, low dropout regulator (LDO) 82 and a MOS 84. A stepless speed control switch 86 is provided between the LDO 82 and the positive pole M+ of the motor 54.

To begin spraying liquid from the sprayer 10, a user manually sets the variable pressure controller 50 to a desired pressure output percentage and pulls the trigger 48 on the handle 46. The pressure switch 74 detects the drop in pressure caused by pulling the trigger 48 to open the valve, not shown, and closes the circuit 70 which turns on the motor 54 by means of an electronic switch (not shown). When the trigger 48 is released, the pressure switch 74 detects the resulting increase in pressure and opens the circuit 70 to turn off the motor 54 by means of the electronic swith. The circuit 70 detects in real time the voltage across the motor 54 and adjusts the duty cycle to achieve constant pressure feedback to the motor 54. The speed control switch 86 adjusts the speed of the motor 54 based on the feedback and has a stepless resistance of 40K-90K corresponding to a constant pressure value of 6.5V of the battery 36.

In prior art controllers, once the motor supply voltage is dropped below a value that sets the speed at around 35% of full value there is no longer enough pressure when the user stops spraying for a pressure switch to turn off the motor. This causes voltage to continue to be supplied to the motor without any liquid flow, resulting in an overload condition and possible burnout of the motor.

In contrast, when the circuit 70 detects that the constant pressure on the motor 54 is low, the circuit 70 determines the operating current value to determine whether the motor 54 is subject to stalling. If the motor 54 is subject to stalling, the controller 76 makes a decision to shut down the motor 54 using an electronic switch (such as a MOSFET), not shown, instead of the pressure switch 74.

As shown in Figure 7, a lookup table correlates the "Pump Motor Voltage" and the "Battery Voltage" to create stall threshold values. The MCU 80 can then make a decision to shut down the motor 54 using the MOS 84. The result is the sprayer 10 can be controlled between approximately 6.5% and 100% of output pressure without causing any damage to the motor 54. Because the motor 54 has a constant pressure value of 12V, the table shown in Figure 7 can normally cut off the pressure switch 74, eliminating the need to activate any auxiliary motor protection.

A variable pressure sprayer according to the invention has been described with reference to specific embodiments and examples. Various details of the invention may be changed without departing from the scope of the invention as definied in the appended claims.

## Claims

1. A variable pressure sprayer (10) comprising:
(a) a housing (12) and a battery (36), a battery-operated motor (54), and a motor-operated liquid pump (56) that are mounted on the housing;
(b) a tank (16) communicating with the pump (56) for holding a supply of liquid;
(c) a liquid outlet (60), a connector and a hose (40), the liquid outlet (60) extending from the pump (56) to the connector adapted to receive the hose (40);
(d) an applicator wand (44) adapted for connection to the hose (40) for directing fluid under pressure to a desired target;
(e) a trigger (48) positioned on the applicator wand (44) adapted to switch between a closed flow position and an open flow position; and
(f) a variable pressure controller (50) positioned on the housing (12) and connected to the motor (54) for varying output pressure percentage of the pump (56).

2. A variable pressure sprayer (10) according to claim 1, further comprising a pressure switch (74) connected to the motor (54), pump (56), and battery (36) and adapted for turning on the motor (54) when a drop in pressure is detected due to the trigger (48) being in the open flow position, and turning off the motor (54) when an increase in pressure is detected due to the trigger (48) being in the closed flow position.

3. A variable pressure sprayer (10) according to claim 1 or 2, wherein the applicator wand (44) includes a valve adapted to open when the trigger (48) is in the open flow position and a nozzle connected to the valve to spray the liquid out of the applicator wand (44) onto the desired target.

4. A variable pressure sprayer (10) according to claim 1, 2 or 3, wherein the variable pressure controller (50) is adapted to vary between 6.5% and 100% of output pressure.

5. A variable pressure sprayer (10) according to one or more of claims 1-4, further comprising a controller (76) including a sensor connected to the motor (54) for detecting a real-time voltage across the motor (54) and a speed control switch (86) connected to the motor (54) for adjusting a duty cycle of the motor (54) based on the real-time voltage across the motor (54) to achieve a predetermined constant pressure output defined by the variable pressure controller (50).

6. A variable pressure sprayer (10) according to claim 5, wherein the speed control switch (86) has a stepless resistance of 40k-90k corresponding to a constant pressure of 6.5V.

7. A variable pressure sprayer (10) according to one or more of claims 1-6, wherein the controller includes a stall protection circuit (70) for determining if the motor (54) is stalling and shutting down the motor (54) based on a comparison of a predetermined stall threshold amp value to a real-time motor amp value.

8. A variable pressure sprayer (10) according to claim 7, wherein the stall protection circuit (70) has a stored reference lookup table of stall threshold amp values based on motor voltage vs. battery voltage, and a processor adapted to receive real-time input for battery voltage, motor voltage, and motor amps, access the lookup table and determine the corresponding stall threshold amp value and determine if the motor (54) should be shut down.

9. A variable pressure sprayer (10) according to claim 8, wherein the stall protection circuit (70) is connected to an electronic switch adapted to turn off the motor (54) when the processor has determined that the motor amp value has exceeded the stall threshold amp value from the lookup table.
